# EUROPEAN PATENT APPLICATION

(11) **EP 4 043 193 A1**
(43) Date of publication of application: **17.08.2022**
(21) Application number: 21157052.8
(22) Date of filing: 15.02.2021
(51) Int. Cl.: B29D 11/00, G02C 7/02

(54) **METHOD OF MANUFACTURING A SPECTACLE LENS AND METHOD OF CONTROLLING MANUFACTURING TOOLS FOR MANUFACTURING SPECTACLE LENSES**

(71) Applicant: Carl Zeiss Vision International GmbH, 73430 Aalen (DE)
(72) Inventor: BRAUNGER, Dieter, 73457 Essingen (DE)
(74) Representative: PATERIS Patentanwälte PartmbB

(57) **Abstract**

A method of manufacturing a spectacle lens (11) with at least one diffusing zone (13) and at least one a clear zone (12) is provided. The method comprises the steps of:
- providing a lens blank;
- applying a material removing process to the lens blank so as to achieve an intermediate spectacle lens (11') with a final shape and a mat surface (11'b); and
- converting at least a part of the mat surface (11'b) of the intermediate spectacle lens (11') into a transparent surface by means of a finishing process.

The at least one diffusing zone (13) is formed by altering the finishing process for a first portion (13') of the surface that shall become the at least one diffusing zone (13) as compared to the finishing process for a second portion (12') of the surface (11'b) that shall become the at least one clear zone (12) such that the surface of the first portion (13') remains a mat surface while she surface of the second portion (12') becomes a transparent surface.

## Description

The invention relates to a method of manufacturing spectacle lenses with at least one diffusing zone and at least one clear zone, and in particular to a method of manufacturing single vision spectacle lenses suitable for controlling myopia progression. In addition, the invention relates to a method of controlling manufacturing tools for manufacturing spectacle lenses as well as to a computer program for controlling manufacturing tools and a non-volatile computer readable storage medium with such a computer program.

The prevalence of myopia (short sightedness) is increasing rapidly. Myopia significantly increases the risk of retinal detachment, (depending on the level of myopia), posterior cataract and glaucoma. The optical, visual and potential pathological effects of myopia and its consequent inconvenience and cost to the individual and community, makes it desirable to have effective strategies to slow the progress, or prevent or delay the onset of myopia, or limit the amount of myopia occurring in both children and young adults.

WO 2005/055891 A1 and WO 2007/092853 A2, disclose that peripheral retinal image (i.e. peripheral vision) plays a major role in determining overall eye length, and is an effective stimulus that promotes peripheral and total eye growth that results in axial elongation, an overall increase in eye size and myopia.

In a key experiment described in WO 2005/055891 A1, primates were reared with annular diffusing lenses placed in front of the eye. The annular diffusing lenses allowed light rays from on axis, central field objects to reach the eye unobstructed. The same annular diffusing lenses scattered or diffused light rays from off-axis, peripheral field objects. This scattering induced form deprivation only to off-axis visual objects in the peripheral field, while maintaining clear vision for the central field. It is known to vision scientist working on myopia development that form deprivation applied to the entire visual field (or central field) of the eye induces axial growth leading to myopia. In the experiment disclosed in WO 2005/055891 A1, involving form deprivation to only the peripheral field, the eye also developed myopia due to axial elongation and eye growth.

In an extension to the experiment described in WO 2005/055891 A1, the annular diffusing lenses were removed from some eyes following development of substantial amounts of myopia. When the annular diffusing lenses were removed, the amount of myopia in the primates decreased.

Further, in a parallel extension to the experiment, for other eyes, in addition to removal of the annular diffusing lenses following development of substantial amounts of myopia, central vision of the primate's eye was eliminated, by using an Argon (blue-green) laser to ablate the macular portion of the retina by photocoagulation, essentially blinding central vision while sparing peripheral vision. Even when on-axis central, foveal vision was interrupted in this manner, the decrease in myopia remained similar to when central vision was not disrupted.

Based on learning from these experiments that demonstrate that the peripheral retinal image (i.e. peripheral vision) plays a major role in determining overall eye length, and is an effective stimulus that promotes peripheral and total eye growth that results in axial elongation, an overall increase in eye size and myopia, WO 2005/055891 A1 discloses a method of abating, retarding or eliminating the progression of myopia in an individual by controlling off-axis aberrations through manipulating the curvature of field of a visual image in a predetermined fashion and ultimately altering, reducing or eliminating eye axial elongation. In this method by which myopia progression may be retarded (and in many cases, halted or reversed) an optical device having a predetermined off-axis aberration-controlled design that abates, retards or eliminates eye growth while simultaneously providing clear central imaging is used.

A paper providing some additional background to the experiments and findings described in the foregoing documents WO 2005/055891 A1 and WO 2007/092853 A2, respectively, is published in Investigative Ophthalmology & Visual Science, November 2005, Vol. 46, No. 11, p. 3965 - 3972. Smith et al. disclose in this paper entitled "Peripheral Vision Can Influence Eye Growth and Refractive Development in Infant Monkeys" that the spectacle lenses used for their experiments are "binocular diffuser spectacle lenses that had either 4- or 8-mm apertures [...] centered on the pupils of each eye. The diffusers were made of frosted plastic and dramatically reduced form vision without substantially reducing the amount of light reaching the eye. The apertures provided a total field of potentially clear central vision of approximately 24° or 37° (assuming a 14-mm vertex distance and a 3.0-mm entrance pupil located 2.7 mm from the cornea). The fields of full illumination through the 4- and 8-mm apertures (i.e., the projection of the entrance pupil through the aperture45) were 3.4° and 16.7°, respectively. The apertures allowed binocular convergence of the pupillary axes for viewing distances as short as 22 and 10 cm, respectively (interpupillary distance, 22 mm; centers of rotation, 8.4 mm from the cornea).

Despite neither of WO 2005/055891 A1 and WO 2007/092853 A2, nor Smith et al. "Peripheral Vision Can Influence Eye Growth and Refractive Development in Infant Monkeys" disclose details with respect to the production of the diffusers they use, diffusers as such are well known.

WO 2010/075319 A2 also refers to the importance of peripheral retinal image determining myopic eye growth. The document proposes a therapeutic treatment method for preventing, ameliorating, or reversing eye-length-related disorders, the therapeutic treatment method comprising: identifying, in a patient, an eye-length-related disorder; and inducing artificial blurring of the patient's peripheral vision in order to decrease an average spatial frequency of images input to the retina of the eye past a threshold spatial frequency to inhibit further lengthening of the patient's eye. In particular, the document proposes providing the patient with spectacle lenses having a first area including a plurality of first elements selected from the group consisting of: (i) bumps on a surface of the spectacle lens; (ii) depressions on the surface of the spectacle lens; (iii) first translucent inclusions in a spectacle lens material; and (iv) first transparent inclusions in the spectacle lens material, the first transparent inclusions having a refractive index different from that of the spectacle lens material. The elements in general are point-shaped elements having a non-zero point density in a range between 0 and 8 dots per mm². The spectacle lens having a second area providing clear vision. The first area is surrounding the second area.

Improvements of this kind of spectacle lenses are disclosed in WO 2018/026697 A1, in WO 2019/152438 A1, and in WO 2020/014613 A1, respectively.

In particular, WO 2018/026697 A1 discloses a pair of eyeglasses, comprising: eyeglass frames; and a pair of spectacle lenses mounted in the frames, the spectacle lenses comprising a point pattern distributed across each spectacle lens, the point pattern comprising an array of dots spaced apart by a distance of 1 mm or less, each point having a maximum dimension of 0.3 mm or less.

WO 2019/152438 A1 discloses a spectacle lens, comprising: a lens material having two opposing curved surfaces; and a scattering region surrounding a clear aperture, wherein the scattering region has a plurality of spaced apart scattering centers sized and shaped to scatter incident light, the scattering centers being arranged in a pattern that includes an irregular variation in spacing between adjacent scattering centers and/or an irregular variation in scattering centers size. The scattering regions are composed of an array of dots as scattering centers, which reduce the contrast of an object in the wearer's peripheral vision by scattering light passing through those areas to the wearer's eye. In general, dots can be provided by forming protrusions and/or recesses on one or both surfaces of each lens in the scattering regions, and/or by forming scattering inclusions in the lens material itself in these regions.

WO 2005/055891 A1 and WO 2007/092853 A2 do not specify which kind of diffuser was used. There is only disclosed that the annular diffuser scatters or diffuses light rays from off-axis, peripheral field objects.

WO 2010/075319 A2 discloses that, as an alternative to the above mentioned dot-shaped bumps, depressions or inclusions, light scattering may be induced by incorporation of particles smaller than the wavelength of the light transmitted through the lenses or produced by a film or coating applied to the surface of the lens. In another embodiment, diffraction is used to provide a diffuse image. Opaque or semi-opaque light absorbing particles as large or larger than the wavelength of light transmitted through the spectacle lenses are incorporated into the spectacle lenses, applied to the surface of the spectacle lenses, or added as a film or coating.

WO 2018/026697 A1, WO 2019/152438 A1 and WO 2020/014613 A1, respectively, disclose, as an alternative to the above dot-shaped bumps, depressions or inclusions, an optical diffuser including a film laminated on a surface of each spectacle lens. Diffusers consisting of a roughened surface, holographic diffusers or ground glass diffusers are also described therein. In particular, a commercially available Bangerter Occlusion Foil was used as a diffuser.

https://www.fielmann.de/wissen/die-brille/glasproduktion/, downloaded on January 22, 2021, discloses in the section "Ein Rohling wird veredelt - individuell für Ihre Brille von Fielmann" a method of manufacturing customized spectacle lenses based on semi-finished blanks. In particular, this section describes that a computer-controlled milling cutter machine treats the semi-finished blanks with a milling tool in order to give the glass its final visual effect. Another milling tool smooths the surface. The result is an intermediate spectacle lens having its final shape but the treated surface of which being still matt and frosted. Therefore, the spectacle lens is polished subsequently in order to generate transparency.

According to https://en.wikipedia.org/wiki/Diffuser_(optics), downloaded on April 1, 2020 "In optics, a diffuser (also called a light diffuser or optical diffuser) is any material that diffuses or scatters light in some manner to transmit soft light. Diffuse light can be easily obtained by reflecting light from a white surface, while more compact diffusers may use translucent material, including ground glass, Teflon, holographs, opal glass, and greyed glass." DE 34 06 393 A1 describes a diffuser made by applying a negative form to the optical element. https://de.wikipedia.org/wiki/Diffusor_(Optik), downloaded on April 1, 2020 describes diffusers being made of a transparent material such as glass with a large number of "imperfections" such as e.g. small air inclusions that serve as scattering centers.

Https://eur01.safelinks.protection.outlook.com/?url=https%3A%2F%2Fwww.r pcphotonics.
com%2Fpdfs%2FOptical_Diffuser_Technologies_Final_030215.pdf&dat a=02%7C01%7C%7Ca080b72122d64ee5348708d84d06a4e5%7C2804224 4bb514cd680347776fa3703e8%7C1%7C0%7C637344038340571177& sdata=DrPGYnm8eNqdvPsmrjvCz2Sps4tVF63liljzly6uz%2BE%3D&res erved=0, downloaded on April 1, 2020, discloses the use of diffractive optical elements as diffusers.

Http://www.dachauer-spezialglas.de/praezisionsoptik/optische-diffusoren--- streuscheiben/oberflaechenstreuscheiben.html, downloaded on April 1, 2020, describes that "the glass surface" of a diffuser "can be roughened mechanically by grinding or sandblasting and chemically by etching using hydrofluoric acid or phosphates."

DE 10 237 880 A1 disclose the production of diffusers by particle blasting.

DE 31 45 278 A1 and US 4,606,747 A disclose in addition to sand blasting, grinding by means of grinding discs and copper wheels a laser ablation process for production of light diffusing areas in decoration art of glass.

US 2004/130790 A1 and US 7,373,744 B1 disclose homogenizers with irregular spatial distribution of scattering centers in the scatter pattern.

Applying dot-shaped bumps or depressions on a surface of a spectacle lens, roughening a surface of a spectacle lens, e.g. by blasting or any other method of roughening, incorporating inclusions into a substrate of a spectacle lens, etc. during the manufacturing process is quite complex. The same applies for generating diffractive or, in particular, holographic diffusers. Laminating a film, e.g. a Bangerter Occlusion Foil, onto curved spectacle lens surfaces is not very practical.

Therefore, there is a need for a simpler process for manufacturing spectacle lenses comprising a diffusing zone of the type described above, in particular such spectacle lenses that are suitable for controlling myopia progression by means of one or more diffusing zones.

It is a first objective of the invention to provide a simple method of manufacturing spectacle lenses, in particular spectacle lenses for controlling myopia progression, comprising a diffusing zone.

It is a second objective of the invention to provide a method of controlling of manufacturing tools for manufacturing a spectacle lens, a computer program for controlling manufacturing tools for manufacturing a spectacle lens, and a non-volatile computer readable storage medium with instructions stored thereon for controlling manufacturing tools for manufacturing a spectacle lens which allow for implementing a simple process for manufacturing spectacle lenses, in particular spectacle lenses for controlling myopia progression, comprising a diffusing zone.

The first objective is achieved by a method of manufacturing a spectacle lens, in particular spectacle lenses for controlling myopia progression, as claimed in claim 1. The second objective is achieved by a method of controlling of manufacturing tools for manufacturing a spectacle lens as claimed in claim 8, by a computer program as claimed in claim 14, and by a non-volatile computer readable storage medium as claimed in claim 15. The depending claims define further developments of the invention.

The following definitions are used within the scope of the present description:
Altering a finishing process
A finishing process shall be considered altered if at least one parameter characterizing the finishing process has been amended. For example, in case the finishing process is a polishing process,
   - the time over which the polishing is executed divided by the size of the area to be polished,
   - the contact pressure, by which the polishing tool contacts the surface to be polished,
   - the size of the polishing tool used for polishing the surface,
   - the shape of the polishing tool used for polishing the surface, -
   - the rotation speed of the polishing tool used for polishing the surface, and
   - the torque applied to the polishing tool used for polishing the surface can be considered to be characterizing parameters for the polishing process, and the polishing process can be considered altered if one or more of these parameters have been amended.

### Aperture

In the context of this specification, the term "aperture" applies to a zone of a spectacle lens that is surrounded by (i) a zone comprising diffusing structures such as scattering centers or (ii) a zone comprising structures providing an additional power or a plurality of additional powers.

### Altering a process

In the context of this specification, altering a process means altering at least one process parameter of the process.

### Clear zone

In the context of this specification, the term "clear zone" applies to a fully transparent zone of a spectacle lens in which no diffusion occurs so that is that provides clear vision when a wearer looks through it. The clear zone may allow for achieving, if necessary assisted by accommodation, a focused image on the fovea. However, there may be zones of a spectacle lens design or a spectacle lens that do not provide a diffusion when a wearer looks through the respective zones but show a residual astigmatic error leading to a blurred image. Such zones are regarded also as a clear zones in the meaning used in the present specification.

### Degree of diffusion

In the context of this specification, the term "degree of diffusion" shall refer to the extent of diffusion. More diffusion means a higher degree of diffusion, less diffusion a lower degree of diffusion.

### Diffuser

In optics, a diffuser (also called a light diffuser or optical diffuser) is an optical element that is made of any material that diffuses or scatters light in some manner to transmit soft light. Diffuse light can be easily obtained by reflecting light from a white surface, while more compact diffusers may use translucent material, including ground glass, Teflon, holographs, opal glass, and greyed glass. Scattering may be achieved by scattering centers which may be point-shaped, examples of which are, e.g., disclosed in WO 2010/075319 A2, WO 2018/026697 A1, WO 2019/152438 A1 and WO 2020/014613 A1, respectively. Scattering centers may also be line-shaped. In the following the term "diffusing" comprises as a special case the term "scattering".

### Diffusing zone

The term "diffusing zone" refers to a zone of a spectacle lens acting as a diffuser.

### Final shape

In the context of a spectacle lens, the term "final shape" refers to the geometric form of the spectacle lens which is not altered any more in following processes such as a polishing process, a lapping process, a coating process, etc.

### Finishing process

In the context of a spectacle lens surface, the term "finishing process" shall refer to the process by which the surface is made transparent. Typically, the finishing process is a polishing or lapping process.

### Focal power

The term "Focal power" is a collective term for the spherical vertex power, which brings a paraxial pencil of parallel light to a single focus (and which is usually considered in the prescription by the "sphere" value or, abbreviated, "sph", and the cylindrical vertex power of a spectacle lens, which brings a paraxial pencil of parallel light to two separate line foci mutually at right angles (DIN ISO 13666:2019, section 3.10.2) and which is usually considered in the prescription by the "cylinder" value or, abbreviated, "cyl". The "vertex power" is the reciprocal of the paraxial vertex focal length (DIN ISO 13666:2019, section 3.10.7). Within the scope of the present description, a beam is to be considered to be a paraxial pencil of rays if its diameter does not exceed 0.05 mm, in particular 0.01 mm.

### Fovea

The term "fovea" is used in the present description to denominate the fovea centralis, which is a central pit of the retina with densely packed photoreceptor cells.

### Intermediate spectacle lens

In the context of this specification, the term "intermediate spectacle lens" shall refer to a spectacle lens after a material removing process by which it has been brought into its final shape but before performing the finishing process. Thus, the intermediate spectacle lens already has the final shape of the spectacle lens but a mat or frosted surface.

### Lens blank

The term "lens-blank" or "semi-finished blank" usually refers to a piece of optical material with one optically finished surface for the making of a spectacle lens (DIN ISO 13666:2019, section 3.8.1). In case neither side of the lens blank has an optically finished surface the lens blank may be referred to as a "rough blank" (Note 1 to DIN ISO 13666:2019, section 3.8.1).

### Material removing process

In the context of this specification, the term "material removing process" shall refer to a process used for shaping a spectacle lens by removing small chips of material until its final shape is reached. Typical material removing process are machining processes such cutting, milling, grinding, etc. and etching processes such as chemical etching or a mechanical etching like, e.g., particle or sand blasting.

### Mat surface

In the context of a spectacle lens, the term "mat surface" refers to a surface of the spectacle lens that exhibits diffusion that is perceptible by a wearer of the spectacle lens.

### Portion of a surface

In the context of this specification the term "portion of a surface" shall refer to a delimited part of the surface where the area of the part is smaller than the area of the whole surface. In the same context, the term "sub-portion" shall refer to a delimited part of a portion of a surface where the area of the part is smaller than the area of the whole portion.

### Prescription

The term "prescription" denotes a summary in which the dioptric powers necessary for correcting a diagnosed refractive error are specified in the form of suitable values. In the case of spherical power, the prescription may contain a value "sph" for sphere. In the case of astigmatic power, the prescription can contain values "cyl" for cylinder and "axis" for axis, and, in the case of prismatic power, the prescription can contain prism and base values. Moreover, the prescription may contain further values, for example the "add" value in the case of multifocal spectacle lenses, said "add" value specifying the difference between the vertex power in the near portion of the spectacle lens and in the distance portion of the spectacle lens. A value "PD" for the interpupillary distance may also be contained in the prescription.

### Smoothened surface

A smoothened surface denotes a surface the surface roughness of which has been reduced. A homogeneously smoothened surface is a surface without zones having distinguishing surface roughness. In particular, a spectacle lens with a diffusing zone and a clear zone has a homogeneously smoothened surface if the surface roughness of the diffusing zone is identical to the surface roughness of the clear zone. The surface roughness of a homogeneously smoothened surface of a spectacle lens can be in the range ≤ 1 nm.

### Spectacle lens/prescription spectacle lens

A spectacle lens is an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1). A prescription spectacle lens is a spectacle lens individually formed to comply with a prescription of an individual.

### Surface roughness

In the context of this specification, the term "surface roughness" represents a measure as to how uneven a surface is.

### Transparent surface

In the context of a spectacle lens, the term "transparent surface" is a surface of the spectacle lens that exhibits no diffusion perceptible by a wearer of the spectacle lens.

### Treated differently

in the context of material removing from or finishing of portions or sub-portions of a spectacle lens, the term "treated differently" means that a portion or a sub-portion is treated in the respective process with process parameters at least one of which differs from the process parameters used when treating another portion or sub-portion of the spectacle lens.

### Zone of a spectacle lens

In the present specification, the term "zone" is used in the context of a spectacle lens or a spectacle lens design to denominate a portion of the spectacle lens which represents an area of the spectacle lens which is smaller than the total area of the spectacle lens.

According to a first aspect of the invention, a method of manufacturing a spectacle lens with at least one diffusing zone and at least one a clear zone is provided. The method comprises the following steps:
- Providing a lens blank. The lens blank is preferably a semi-finished lens blank so that only the front surface or, typically, only the back surface needs to be treated in the following steps. However, providing a rough blank which requires treating of the front surface and the back surface would also be conceivable.
- Applying a material removing process to the lens blank so as to obtain an intermediate spectacle lens with a final shape and a mat surface. The material removing process, which in case of a semi-finished lens blank is applied only to one of the front surface and the back surface, may include at least one of an abrasive process such as cutting, milling, grinding, or any other kind of machining, and an etching process such as chemical etching or a mechanical etching like, e.g., particle or sand blasting, etc. In the material removing process, different ones of the mentioned material removing processes may be applied after each other.
- Converting at least a part of the mat surface of the intermediate spectacle lens into a transparent surface by means of a finishing process. The finishing process may, e.g., include at least one of a lapping process or a polishing process. In the finishing process, different ones of the mentioned finishing processes may be applied after each other.

According to the invention, the at least one diffusing zone is formed by altering the finishing process for a first portion of the surface that shall become the at least one diffusing zone as compared to the finishing process for a second portion of the surface that shall become the at least one clear zone such that the surface of the first portion remains a mat surface while she surface of the second portion becomes a transparent surface.

The invention is based on the finding that a prescription spectacle lens is conventionally manufactured from a semi-finished lens blank by a material removing process that is typically applied to the back surface of the semi-finished lens blank. The material removing process leads to an intermediate spectacle lens having its final shape but a mat surface, typically a mat back surface in case of using a semi-finished lens blank. Then, in a subsequent finishing process the mat surface is made transparent. In case of using a rough blank instead of a semi-finished lens blank, both the front surface and the back surface may require finishing to make them transparent.

As mentioned, before performing the finishing process the surface generated by means of the material removing process is a mat surface that diffuses light to some degree. Therefore, the intermediate spectacle lens after the material removing process already has at least one surface that at least partially provides optical properties required in the diffusing zone or at least close to said optical properties being required in the diffusing zone and being of the kind disclosed in Smith et al. "Peripheral Vision Can Influence Eye Growth and Refractive Development in Infant Monkeys", Investigative Ophthalmology & Visual Science, November 2005, Vol. 46, No. 11, p. 3965 - 3972, WO 2005/055891 A1, WO 2007/092853 A2, WO 2018/026697 A1, WO 2019/152438 A1 and WO 2020/014613 A1, respectively.

Thus, since the intermediate spectacle lens prior to the finishing process inevitably has light diffusing properties it is not necessary to finish the entire surface. Instead, only those portions of the surface that shall become the at least one clear zone need to be fully finished while those portions of the intermediate spectacle lens that shall become a diffusing zone may be finished to a lesser degree or even left in the state as they are in the intermediate spectacle lens.

As, according to the invention, only those portions of the intermediate spectacle lens which finally shall provide clear or clearer (i.e. less diffusing) properties are finished, in particular lapped and/or polished to the required extent, there is no further step for producing the diffusing zone on or in the finished spectacle lens necessary. In this way, myopia control spectacle lenses of the kind described in Smith et al. "Peripheral Vision Can Influence Eye Growth and Refractive Development in Infant Monkeys", Investigative Ophthalmology & Visual Science, November 2005, Vol. 46, No. 11, p. 3965 - 3972, WO 2005/055891 A1, WO 2007/092853 A2, WO 2018/026697 A1, WO 2019/152438 A1 and WO 2020/014613 A1, respectively, namely having a clear zone, typically a central clear zone, and a diffusing zone, which is typically an annular zone surrounding the central clear zone, can be manufactured in a less complex and, thus, cost efficient manner, as compared to the state of the art processes.

Altering the finishing process may be done by amending the parameter value of at least one process parameter of the finishing process when finishing the first portion of the surface as compared to finishing the second portion of the surface. Process parameters of the finishing process may be
- the duration of the finishing process divided by the size of the area to be finished,
- the contact pressure, by which a finishing tool like a polishing tool or a lapping tool contacts the surface to be finished,
- the size of the finishing tool, i.e. the polishing tool or lapping tool, used for finishing the surface,
- the shape of the finishing tool, i.e. the polishing tool or lapping tool, used for finishing the surface,
- the rotation speed of the finishing tool, i.e. the polishing tool or lapping tool, used for finishing the surface, and
- the torque applied to the finishing tool, i.e. the polishing tool or lapping tool, used for finishing the surface.

Amending the parameter value of at least one process parameter of the finishing process is a very simple way to generate surface portions with different degrees of diffusing properties.

A particularly simple way of altering the finishing process is to amend the value of the duration of the finishing process divided by the area to be finished. In this case, the diffusing zone can simply be produced by reducing the value for the duration of the finishing process divided by the area to be finished for the first portion of the surface as compared to the second portion of the surface. In particular, in case the surface of the intermediate spectacle lens already has the desired diffusing properties the value for the duration of the finishing process divided by the area to be finished may be reduced to zero for the first portion of the surface.

The finishing process may comprise at least two steps. Then, altering the finishing process may be done by amending the parameter value of at least one process parameter in at least one of the steps of the finishing process when finishing the portion of the surface that shall become the diffusing zone as compared to finishing the portion of the surface that shall become the clear zone. If the finishing process includes more than one step the alterations of each step of the finishing process may be individually adapted which allows for more fine tuning in the properties of the at least one diffusing zone as compared to the at least one clear zone. In a special case of amending the parameter value of at least one process parameter in at least one of the steps of the finishing process, the duration of the finishing process divided by the size of the area to be finished may be reduced to zero in a first of the steps for the portion to become the diffusing zone. In other words, in this special case the first step of the finishing process is only applied to the portion which is to become the clear zone to make this portion transparent. A second step of the finishing process, which may be applied with the same values of process parameters to the whole surface, may then be used to reduce the surface roughness of the surface to a given value which provides a desired diffusing effect the diffusing zone. As the surface roughness of the portion to become the clear zone has already been reduced to well below the given value in the first step in order to provide full transparency the reduction of the surface roughness, although applied to the whole surface, would not affect this portion.

In an advantageous development of the inventive method, a surface roughness that provides a degree of diffusion desired for the diffusing zone is given, and the material removing process is performed such as to obtain the given surface roughness. This development allows for reducing the amount of finishing necessary for a portion of the surface that shall become the at least one diffusing zone. It might even be possible to fully omit the finishing for a portion of the surface that shall become the at least one diffusing zone, e.g. by reducing the value of the duration of the finishing process for this portion to zero, or by reducing the value of the contact pressure by which a finishing tool contacts this portion to zero.

The diffusing zone of the manufactured spectacle lens may include sub-zones with different diffusing properties. Such a spectacle lens can be easily manufactured with the inventive method by treating different sub-portions of the portion of the surface that shall become the diffusing zone differently from each other in at least one of the material removing process and the finishing process. For example, the sub-portions may be treated in the material removing process and/or in the finishing process with process parameters which differ in at least one parameter value. By means of such sub-zones steps or gradients in the diffusing properties may be realized.

In order to reduce the surface roughness the surface of the spectacle lens may be smoothened by applying a coating, which may in particular be a hard coating, to the surface. The coating material typically has a viscosity in the range between 3 and 30 mPa*s and an interfacial tension smaller than 40 mN/m, both at 15 degree Celsius. With applying the coating smoothing the surface, a surface roughness of 1 nm or less can be achieved while the diffusing properties of the diffusing zone are preserved due to the still rough interface between the diffusing zone and the coating.

According to a second aspect of the invention, a method of controlling manufacturing tools for manufacturing a spectacle lens is provided, where the manufacturing tools include a material removing tool and a finishing tool. The method includes the steps of:
- Controlling the material removing tool so as to form an intermediate spectacle lens having a final shape and a mat surface from a lens blank. The lens blank is preferably a semi-finished lens blank so that only the front surface or, typically, the back surface needs to be treated by the material removing tool. However, providing a rough blank which requires treating of the front surface and the back surface would also be possible. As the material removing tool, an abrasive tool such as a cutting tool, a milling tool, a grinding tool, or any other kind of tool suitable for machining the lens blank may be used. In addition, or as an alternative, an etching tool such as a tool for chemical etching or a tool for mechanical etching like, e.g., a particle or sand blasting tool, etc. may be used as the material removing tool. In the material removing process, different ones of the mentioned material removing tools may be successively applied and controlled.
- Controlling the finishing tool so as to convert at least a part of the mat surface of the intermediate spectacle lens into a transparent surface. The finishing tool may, e.g., be a lapping tool or a polishing tool. In the finishing process, different ones of the mentioned finishing tools may be successively applied and controlled.

According to the invention, the finishing tool is further controlled differently for a first portion of the surface and a second portion of the surface, so that a diffusing zone with a mat surface is formed in at least the first portion of the surface and a clear zone with a transparent surface is formed in at least the second portion of the surface.

The inventive method of controlling manufacturing tools for manufacturing a spectacle lens allows for implementing the inventive method of manufacturing a spectacle lens with at least one diffusing zone and at least one a clear zone by controlling manufacturing machines. In other words, the inventive method of controlling manufacturing tools for manufacturing a spectacle lens allows for controlling manufacturing tools such that the advantages described with respect to the inventive method of manufacturing a spectacle lens with at least one diffusing zone and at least one a clear zone can be realized.

Controlling the finishing tool differently may be done by using different parameter values for at least one process parameter of the finishing process. Process parameters may be
- the duration of the finishing process divided by the size of the area to be finished,
- the contact pressure, by which a finishing tool like a polishing tool or a lapping tool contacts the surface to be finished,
- the size of the finishing tool, i.e. the polishing tool or lapping tool, used for finishing the surface,
- the shape of the finishing tool, i.e. the polishing tool or lapping tool, used for finishing the surface,
- the rotation speed of the finishing tool, i.e. the polishing tool or lapping tool, used for finishing the surface, and
- the torque applied to the finishing tool, i.e. the polishing tool or lapping tool, used for finishing the surface.

Amending the parameter value of at least one process parameter of the finishing process is a very simple way to generate surface portions with different degrees of diffusing properties. A particularly simple way of controlling the finishing tool differently is to use different values for the duration of the finishing process divided by the area to be finished as process parameter.

The finishing process may comprise at least two steps. In this case, controlling the finishing tool differently is done by using different parameter values for at least one process parameter in at least one of the steps. This allows for more fine tuning in the properties of the at least one diffusing zone as compared to the at least one clear zone.

In an advantageous development of the inventive method of controlling manufacturing tools for manufacturing a spectacle lens, a surface roughness that provides a degree of diffusion desired for the diffusing zone is given, and the material removing tool is controlled such as to obtain the given surface roughness. This development allows for reducing the amount of finishing necessary for a portion of the surface that shall become the at least one diffusing zone. It might even be possible to fully omit the finishing for a portion of the surface that shall become the at least one diffusing zone.

In another advantageous development of the inventive method of controlling manufacturing tools for manufacturing a spectacle lens, at least one of the material removing tool and the finishing tool is controlled such as to treat different sub-portions of the first portion differently. This allows for manufacturing spectacle lenses in which the diffusing zones include sub-zones with different diffusing properties. For example, the sub-portions may be treated by the material removing tool and/or by the finishing tool with process parameters which differ in at least one parameter value. By means of such sub-zones steps or gradients in the diffusing properties may be realized.

According to the second aspect of the invention also a computer program for controlling manufacturing tools for manufacturing a spectacle lens with at least one diffusing zone and at least one a clear zone is provided. The manufacturing tools include a material removing tool and a finishing tool, and the computer program comprises instructions that, when executed on a computer, prompt the computer to:
- control the material removing tool so as to form an intermediate spectacle lens from a lens blank, the intermediate spectacle lens having a final shape and a mat surface; and
- control the finishing tool so as to convert at least a part of the mat surface of the intermediate spectacle lens into a transparent surface.

The computer program further comprises instructions that, when executed on a computer, prompt the computer to control the finishing tool differently for a first portion of the surface and a second portion of the surface, so that a diffusing zone with a mat surface is formed in at least the first portion of the surface and a clear zone with a transparent surface is formed in at least the second portion of the surface.

According to the second aspect of the invention also a non-volatile computer readable storage medium with instructions stored thereon for controlling manufacturing tools for manufacturing a spectacle lens is provided. The manufacturing tools include a material removing tool and a finishing tool, and the instructions, when executed on a computer, prompt the computer to:
- control the material removing tool so as to form an intermediate spectacle lens from a lens blank, the intermediate spectacle lens having a final shape and a mat surface; and
- control the finishing tool so as to convert at least a part of the mat surface of the intermediate spectacle lens into a transparent surface.

The storage medium further comprises instructions stored thereon which, when executed on the computer, prompt the computer to control the finishing tool differently for a first portion of the surface and a second portion of the surface, so that a diffusing zone with a mat surface is formed in at least the first portion of the surface and a clear zone with a transparent surface is formed in at least the second portion of the surface.

The inventive computer program and the inventive storage medium allow for preparing a computer or a controller to control manufacturing tools for manufacturing a spectacle lens according to the inventive method of controlling manufacturing tools for manufacturing a spectacle lens.

Further features, properties and advantages of the invention will become clear from the following description of embodiments of the inventing in conjunction with the accompanying drawings.
- Figure 1: schematically shows a single vision spectacle lens with a central clear zone and a peripheral diffusing zone surrounding the central clear zone in a view onto the back surface of the spectacle lens.
- Figure 2: shows the spectacle lens of figure 1 in a side view.
- Figure 3: shows a flow chart representing a method of manufacturing the spectacle lens of figures 1 and 2.
- Figure 4: shows a first polishing step for finishing the back surface of the spectacle lens shown in figures 1 and 2.
- Figure 5: shows a second polishing step for finishing the spectacle lens shown in figures 1 and 2.
- Figure 6: shows a spectacle lens similar to that shown in figures 1 and 2 but with a diffusing zone including two sub-zones.

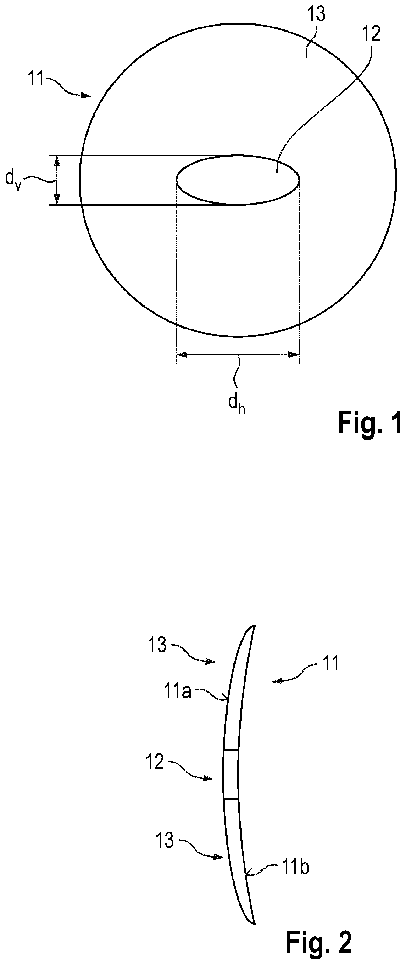

A spectacle 11 lens with at least one a clear zone 12 and at least one diffusing zone 13 is shown in figures 1 and 2, where figure 1 shows the spectacle lens 11 in a view onto its back surface 11b and figure 2 shows the spectacle lens 11 in a side view. Due to the myopic wearer the spectacle lens 11 is designed to provide full far vision correction according to the wearer's prescription. Therefore, the spectacle lens 11 is a minus lens. Although the spectacle lens 11 shown in figures 1 and 2 is a single vision spectacle lens 11 it may as well be a progressive spectacle lens.

The spectacle lens 11 has a front surface 11a which, in the present example, is a spherical surface, and a back surface 11b which is manufactured to a shape according to the prescription. However, it would also be possible to have a spherical back surface and a front surface which is manufactured to a shape according to the prescription. Moreover distributing the properties necessary to achieve the power prescribed in the prescription over the front surface and the back surface so that neither of them is spherical is also a possibility.

The clear zone of the spectacle lens 11 shown in figures 1 and 2 is fully transparent for providing a clear image of a viewed object to the foveal zone of the retina of a wearer's eye and a diffusing zone 13 providing scattering optical properties. Therefore, the diffusing zone 13 acts as a scattering zone. Different from the circular clear zones described in WO10075319 A2, WO18026697 A1, WO19152438 A1 and WO20014613 A1, respectively, the dimension dₕ of the clear zone 12 in horizontal direction is larger than the dimension dᵥ in vertical direction so that the shape of the clear zone 12 is elliptical in the present example. However, the clear zone 12 may as well be circular instead of elliptical. Shapes and sizes of the clear zone 12 and the diffusing zone 13 may vary depending on specific use conditions. However, a circular or slightly elliptical clear zone surrounded by one or more (concentrically arranged) annular peripheral diffusing zones is preferred as it allows for enlarging the clear zone in reading direction without enlarging it perpendicular to the reading direction. Compared to spectacle lenses with circular clear zones, a spectacle lens with an elliptical clear zone thus increases comfort for the wearer when reading while keeping the negative effect on the spectacle lens' ability to control myopia progression at a minimum.

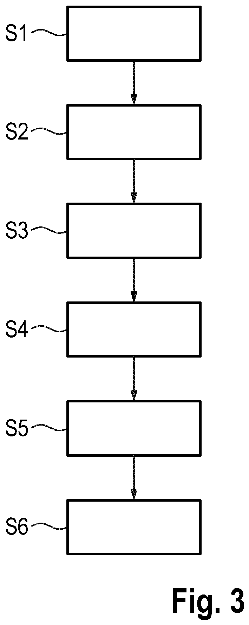

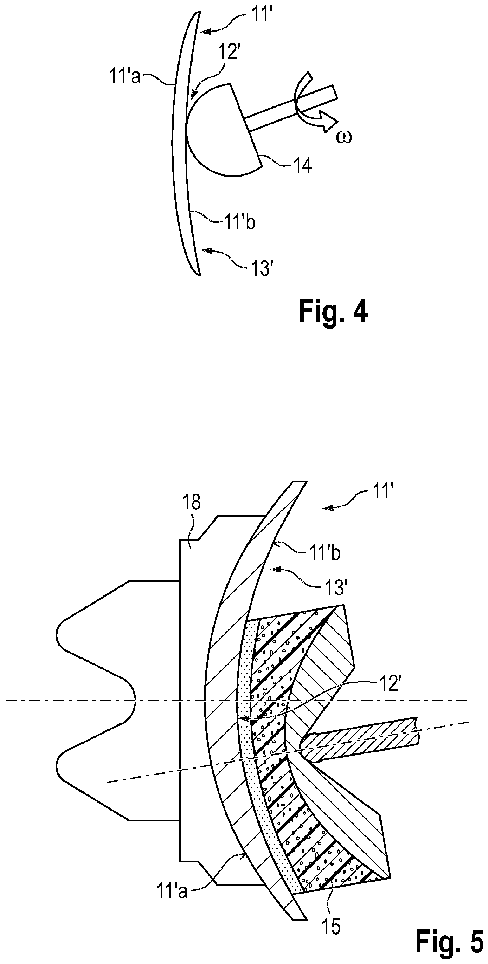

An exemplary embodiment of a method of manufacturing a spectacle lens as it is shown in figures 1 and 2 will be described with respect to figures 3 to 5. Figure 3 shows a flow chart representing different steps of the exemplary embodiment while figures 4 and 5 show different polishing steps used throughout the exemplary embodiment. Like the spectacle lens shown in figures 1 and 2 the spectacle lens manufactured in the exemplary embodiment of the method of manufacturing a spectacle lens is a prescription single vision spectacle lens, i.e. a spectacle lens manufactured individually for a wearer based on the wearer prescription data.

In a first step S1 of the exemplary embodiment, a semi-finished lens blank is chosen based on the data in the wearer's prescription. The semi-finished lens blank is chosen from a series of semi-finished lens blanks having finished front surfaces with different spherical curvatures, called base curves in the following. From this series of semi-finished lens blanks, a lens blank with a suitable base curve is chosen based on the data in the wearer's prescription. Choosing can be done using a so called base curve chart which associates the base curves of the semi-finished lens blanks to sphere and cylinder values given in 0.25 diopter steps by selecting the semi-finished lens blank which is associated to sphere and cylinder values matching, or being closest to, the sphere and cylinder values given in the wearer's prescription.

Once a semi-finished lens blank is chosen, in step S2 the semi-finished lens blank is provided with a protective coating on its front surface and mounted with its protected front surface to a so called blocker 18 (see figure 5) which is a holding piece for holding the semi-finished lens blank during the following processing steps so that its back surface is accessible for material removing and polishing steps.

After the semi-finished lens blank has been mounted to the blocker in step S2, a cutting process is performed by which the back surface of the semi-finished lens blank is cut into its final shape based on the data in the wearer's prescription (step S3). The cutting process may optionally include two or more sub-processes which differ in the cutting tool used, or in parameter values used in the cutting process like, for example in the values for the cutting speed, the pressure by which the cutting tool is pressed against the material, etc.

After the cutting is completed the back surface 11'b has its final shape but is still a mat surface with a frosted appearance. The back surface 11'b is mat due to a remaining surface roughness after the cutting. In the present exemplary embodiment, the surface roughness is a result of the cutting process used. However, in alternative embodiments of the method a predefined surface roughness may be given which corresponds to a desired degree of light diffusion. Then, the size and/or the shape of the cutting tool and/or the values of the parameters used in the cutting process are adapted such that the given surface roughness is present on the back surface 11'b when the cutting step is completed.

Although the back surface is brought into its final shape by means of the cutting process in the present exemplary embodiment other material removing processes could be used instead. For example, the back surface could be brought into its final shape by means of a milling process, a grinding process or any other kind of machining process. In a further alternative, the back surface could be brought into its final shape by an etching process, in particular by a chemical etching process or by a mechanical etching process like particle or sand blasting. Furthermore, it would also be possible to successively apply different ones of the mentioned processes in order to bring the back surface into its final shape. However, combining different ones of material removing processes would make the method more complex than necessary.

After the material removing process performed in step S3 the worked semi-finished lens blank with the back surface 11'b having its final shape can be regarded as an intermediate spectacle lens 11' in which all lens surfaces 11'a, 11'b have their final shapes and in which the back surface 11'b is mat. Please note, that if the front surface would be cut instead of the back surface the front surface 11'a would be the mat surface and not the back surface 11'b. Moreover, if both the back surface and the front surface are cut in step S3 both surfaces 11'a, 11'b would be mat.

In step S4 the mat surface 11'b is polished in order to convert at least a portion 12' of the mat surface into a transparent surface (step S4). In the present exemplary embodiment, the polishing process is a two-step process in which, in a first polishing step, those portions 12' of the back surface which correspond to the clear zone 12 of the spectacle lens 11 to be manufactured is polished with a polishing too 14 having a geometry that allows for polishing small areas of the back surface 11'b, as it is shown in figure 4. The polishing tool 14 shown in figure 4 has a spherical geometry so that only a small area of the polishing tool 14 contacts the back surface 11'b of the intermediate spectacle lens 11'. Then, the pressure by which the polishing tool 14 is pressed against the back surface 11B, the rotational speed of the polishing tool as well as the torque applied to the polishing tool are set such that after a certain duration of the first polishing step those portions 12' of the intermediate spectacle lens 11' which shall become the clear zone 12 show transparency. Please note that the diameter of the spherical polishing tool 14 depends on the dimension of the clear zone 12 to be manufactured. The smaller the clear zone 12 shall be the smaller would be the diameter of the polishing tool 14. Moreover, other geometries of the polishing tool 14 would also be possible. For example, the polishing tool 14 could have a conical or an elliptical shape. In general, the shape of the polishing tool needs to be chosen such that it is possible to perform polishing only in those portions of the spectacle lens which are to become the clear zone.

After the portion 12' of the back surface 11'b which resembles the clear zone 12 of the spectacle lens 11 has been polished to transparency in step S4 a second polishing step of the polishing process is applied to the back surface 11'b of the intermediate spectacle lens 11' in step S5. This second polishing step is applied to the whole back surface 11'b. Typically the surface roughness after the cutting process is so high that the degree of diffusion provided by the rough surface is higher than desired for the diffusing zone 13. Although it is, in principle, possible to predefine a desired surface roughness to be achieved in the cutting process and to perform the cutting process such as to achieve the desired surface roughness it is usually easier to provide the desired surface roughness by means of a second polishing step as it is done in the present exemplary embodiment. This second polishing step is applied to the whole back surface 11'b. However, as those portions 12' of the back surface 11'b which shall become the clear zone 12 have already been polished to transparency in the first polishing step the second polishing step only affects those portions 13' which still have a higher surface roughness than the desired surface roughness, i.e. those portions 13' of the back surface 11' which are to become the diffusing zone 13. The polishing tool 15 of the second polishing step is therefore a polishing tool providing a large contact area to the back surface 11' of the intermediate spectacle lens 11'. The parameter values of the second polishing step are set such that the surface roughness of those portions 13' that have a higher surface roughness than the desired surface roughness, i.e. those portions that are to become the diffusing zone 13, is reduced to the desired surface roughness.

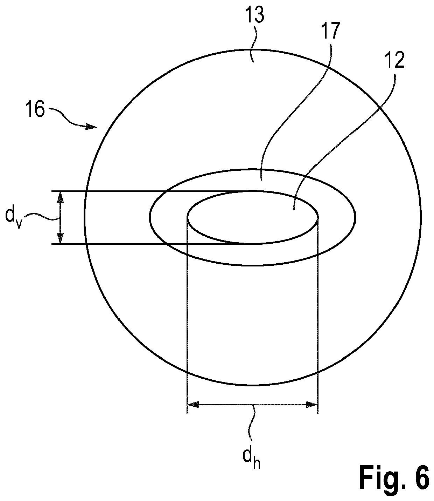

In case the diffusing zone 13 shall have sub-zones 13, 17 with different diffusing properties as is schematically shown in figure 6, further polishing steps could be present in addition to the two polishing steps of the present exemplary embodiment. For example, some sub-portions of the portion to become the diffusing zone could be polished in an additional polishing step that is performed after the first polishing step and before the second polishing step and uses a polishing tool like the tool shown in figure 4 in order to reduce the surface roughness to a limit that lies between full transparency and the surface roughness provided by the last polishing step shown in figure 5. This allows, for example, to produce diffusing zones with diffusing properties increasing or decreasing in radial direction of the spectacle lens. The further polishing steps following the first polishing step and preceding the second polishing step may as well be performed using the same polishing tool 14 as in the first polishing step but with amended parameter values of one or more process parameters. For example, after polishing the portions 12' of the back surface 11'b which are to become the clear zone 12 the polishing tool 14 could be used to polish an annular sub-zone 17 of the diffusing zone 13 surrounding the clear zone 12 to a surface roughness which does not provide full transparency but provides less diffusion than other areas of the diffusing zone 13. This could allow for manufacture spectacle lenses in which the diffusion increases in radial direction which might make the spectacle lenses more comfortable for the wearers without reducing the ability to control myopia progression too much.

Figure 6 shows a spectacle lens 16 which has a further diffusing zone 17 in addition to the clear zone 12. The further diffusing zone 17, which can be regarded as a sub-zone of the diffusing zone 13, has diffusing properties which lie between full transparency and the diffusing property of the other areas of the diffusing zone 13. Those other areas of the diffusing zone can be regarded as a second sub-zone of the diffusing zone.

After all polishing steps performed in step S4 and step S5 have been completed, the entire back surface 11b may be coated as in usual manufacturing processes. For example, a hard coating and/or one or more additional functional coatings such as antireflective coatings, antistatic coatings, hydrophobic coatings, antibacterial coatings, antiviral coatings, oleophobic coatings, dust repelling coatings, etc. may be applied to the back surface. In addition, these coatings may be applied to the front surface, too. Examples for the coatings mentioned above and depositing techniques for applying the coatings are, for example, disclosed in EP 2 878 989 A1, WO 2017/108871 A1, EP 3 312 662 A1, EP 3 527 385 A1, EP 3 542 956 A1, EP 3 543 003 A1 and WO 2010/025829 A1.

In a preferred embodiment the functional coating layer being directly applied to, i.e. getting in direct contact with, the abrasively worked substrate surface is configured to homogeneously smoothen the abrasively worked substrate surface. In general, the functional coating layer getting in close contact with the abrasively worked substrate surface is the hard coating. In exceptional cases an adhesion promoting layer and/or a primer layer is deposited on top of the abrasively worked substrate surface prior to deposition of the hard coating layer. Smoothing the abrasively worked substrate surface requires a viscosity of the functional coating layer material being directly applied to, i.e. getting in direct contact with, the abrasively worked substrate surface, in particular a hard lacquer being used for fabricating the prescribed hard coating layer, being in the range between 3 and 30 mPa*s at 15 degree Celsius. Moreover, the coating layer material should have an interfacial tension smaller than 40 mN/m at 15 degree Celsius. By means of the coating, the surface roughness of the coated surface can be reduced to 1 nm less. When applying the coating smoothing the surface, the diffusing properties of the diffusing zone are preserved due to the still rough interface between the diffusing zone and the coating.

The method described with respect to figure 3 can be performed by means of a suitable computer program which, when run on a computer or a controller, allows for controlling numerically control manufacturing machines, for example the manufacturing machines with the cutting tools and the polishing tools described with respect to steps S3 to S5. The computer program may be stored on a non-volatile computer readable storage medium such as a hard disk, a solid-state-drive, a flash memory, etc. In addition, the computer program may be downloadable through a network such as a local area network (LAN) or a wide area network (WAN) like the internet. Once loaded into a computer a computer program can be used for controlling the manufacturing machines.

The invention has been illustrated by means of an exemplary embodiment using cutting and polishing processes for material removing and finishing, respectively. However, to a skilled person it is clear from the description that various other processes could be used for material removing as well as for finishing. In particular, the polishing step or the polishing sub-steps may be replaced by lapping steps ore lapping sub-steps. Moreover, it would also be possible to combine one or more polishing steps or polishing sub-steps with one or more lapping steps or lapping sub-steps. Therefore, the present invention shall not be restricted to the specific processes used in the exemplary embodiment, which has merely been used for describing the invention in an illustrative manner. Instead, the invention shall only be restricted by the appended claims.

## Claims

1. A method of manufacturing a spectacle lens (11) with at least one diffusing zone (13) and at least one a clear zone (12), the method comprising the steps of:
- providing a lens blank;
- applying a material removing process to the lens blank so as to achieve an intermediate spectacle lens (11') with a final shape and a mat surface (11'b); and
- converting at least a part of the mat surface (11'b) of the intermediate spectacle lens (11') into a transparent surface by means of a finishing process;
**characterized in that**
- the at least one diffusing zone (13) is formed by altering the finishing process for a first portion (13') of the surface that shall become the at least one diffusing zone (13) as compared to the finishing process for a second portion (12') of the surface (11'b) that shall become the at least one clear zone (12) such that the surface of the first portion (13') remains a mat surface while she surface of the second portion (12') becomes a transparent surface.

2. The method as claimed in clam 1, **characterized in that** altering the finishing process is done by amending the parameter value of at least one process parameter of the finishing process when finishing the first portion (13') of the surface (11'b) as compared to finishing the second portion (12') of the surface (11'b).

3. The method as claimed in claim 2, **characterized in that** one of the process parameters is the duration of the finishing process divided by the area to be finished and amending the finishing process is done by reducing the value of the duration of the finishing process divided by the area to be finished for the first portion (13') of the surface (11'b) as compared to the second portion (12') of the surface (11'b).

4. The method as claimed in claim 2 or claim 3, **characterized in that** the finishing process comprises at least two steps and altering the finishing process is done by amending the parameter value of at least one process parameter in at least one of the steps of the finishing process when finishing the first portion (13') of the surface (11'b) as compared to finishing the second portion (12') of the surface (11'b).

5. The method according to any one of the claims 1 to 4, **characterized in that** a surface roughness that provides a degree of diffusion desired for the diffusing zone (13) is given and the material removing process is performed such as to obtain the given surface roughness.

6. The method according to any one of the claims 1 to 5, **characterized in that** the different sub-portions of the first portion (13') of the surface (11'b) are treated differently from each other in at least one of the material removing process and the finishing process.

7. The method according to any one of the preceding claims, **characterized in that** the surface of the spectacle lens is smoothened by applying a coating to the surface.

8. A method of controlling manufacturing tools for manufacturing a spectacle lens (11), where the manufacturing tools include a material removing tool and a finishing tool (14, 15), the method comprising the steps of:
- controlling the material removing tool so as to form an intermediate spectacle lens (11') from a lens blank, the intermediate spectacle lens (11') having a final shape and a mat surface (11'b); and
- controlling the finishing tool (14, 15) so as to convert at least a part of the mat surface of the intermediate spectacle lens (11') into a transparent surface;
**characterized in that**
- the finishing tool (14, 15) is controlled differently for a first portion (13') of the surface (11'b) and a second portion (12') of the surface (11'b), so that a diffusing zone (13) with a mat surface is formed in at least the first portion (13') of the surface (11'b) and a clear zone with a transparent surface is formed in at least the second portion (12') of the surface (11'b).

9. The method as claimed in claim 8, **characterized in that** the finishing tool (14, 15) is controlled differently by using different parameter values for at least one process parameter of the finishing process.

10. The method as claimed in claim 9, **characterized in that** one of the process parameters is the duration of the finishing process divided by the area to be finished and controlling the finishing tool differently is done by using different values of the duration of the finishing process divided by the area to be finished.

11. The method as claimed in claim 9 or claim 10, **characterized in that** the finishing process comprises at least two steps and controlling the finishing tool (14, 15) differently is done by using different parameter values for at least one process parameter in at least one of the steps.

12. The method according to any one of the claims 8 to 11, **characterized in that** a surface roughness that provides a degree of diffusion desired for the diffusing zone (13) is given, and the material removing tool is controlled such as to obtain the given surface roughness.

13. The method according to any one of the claims 8 to 12, **characterized in that** at least one of the material removing tool and the finishing tool (14, 15) is controlled such as to treat different sub-portions of the first portion differently.

14. A computer program for controlling of manufacturing tools for manufacturing a spectacle lens (11) with at least one diffusing zone (13) and at least one a clear zone (12), where the manufacturing tools include a material removing tool and a finishing tool (14, 15), comprising instructions that, when executed on a computer, prompt the computer to:
- control the material removing tool so as to form an intermediate spectacle lens (11') from a lens blank, the intermediate spectacle lens (11') having a final shape and a mat surface; and
- control the finishing tool (14, 15) so as to convert at least a part of the mat surface of the intermediate spectacle lens (11') into a transparent surface;
**characterized in that**
- the computer program further comprises instructions that, when executed on a computer, prompt the computer to control the finishing tool (14, 15) differently for a first portion (13') of the surface (11'b) and a second portion (12') of the surface (11'b), so that a diffusing zone (13) with a mat surface is formed in at least the first portion (13') of the surface (11'b) and a clear zone (12) with a transparent surface is formed in at least the second portion (12') of the surface (11'b).

15. A non-volatile computer readable storage medium with instructions stored thereon for controlling of manufacturing tools (14, 15) for manufacturing a spectacle lens (11) with at least one diffusing zone (13) and at least one a clear zone (12), where the manufacturing tools include a material removing tool and a finishing tool (14, 15), the instructions, when executed on a computer, prompting the computer to:
- control the material removing tool so as to form an intermediate spectacle lens (11) from a lens blank, the intermediate spectacle lens (11) having a final shape and a mat surface; and
- control the finishing tool (14, 15) so as to convert at least a part of the mat surface of the intermediate spectacle lens (11) into a transparent surface;
**characterized in that**
- the storage medium further comprises instructions stored thereon, which instructions, when executed on the computer, prompt the computer to control the finishing tool (14, 15) differently for a first portion (13') of the surface (11'b) and a second portion (12') of the surface (11'b), so that a diffusing zone (13) with a mat surface is formed in at least the first portion (13') of the surface (11'b) and a clear zone (12) with a transparent surface is formed in at least the second portion (12') of the surface (11'b).
